# EUROPEAN PATENT APPLICATION

(11) **EP 2 239 698 A1**
(43) Date of publication of application: **13.10.2010**
(21) Application number: 10159354.9
(22) Date of filing: 08.04.2010
(51) Int. Cl.: G06Q 10/00, G06Q 90/00, G06Q 30/00

(54) **Apparatus and method for improving web search speed in mobile terminals**

(30) Priority: 08.04.2009 KR 20090030272
(71) Applicant: Samsung Electronics Co., Ltd., Suwon-si, Gyeonggi-do (KR)
(72) Inventor: Yoon, Mi-Jeong, Suwon-si, Gyeonggi-do (KR)
(74) Representative: Ketelaars, Maarten F.J.M.

(57) **Abstract**

An apparatus and a method for web searching in a mobile terminal that supports a wireless Internet are provided. More particularly, an apparatus and a method for web searching, for improving a search speed by determining a searching result corresponding to a keyword, and changing an output point of the searching result based on the keyword. In the method, an output point of search results is changed before the search results corresponding to a web search request are output. The search results are output according to the changed output point.

## Description

### Background of the Invention

### 1. Field of the Invention

The present invention relates to mobile terminals that supports a wireless Internet. More particularly, the present invention relates to an apparatus and a method for improving a web search speeds.

### 2. Description of the Related Art

A mobile terminal has become an indispensable accessory to people today and is widely used regardless of age or sex, and service providers. Many manufacturers of portable terminals competitively develop products, services) and applications to perform new, improved and expanded functions. These new, improved and expanded functions differentiate and distinguish the different manufacturers of portable terminals.

For example, mobile terminals have been developed to operate as a multimedia apparatus that can provide a phonebook, games, a Short Message Service (SMS), an Electronic mail (e-mail), a Motion Picture Expert Group Audio Layer-3 (MP3) player, a schedule management function, a digital camera, and a wireless Internet service. Each of these listed functions may also be expanded to include numerous sub-functions and various services.

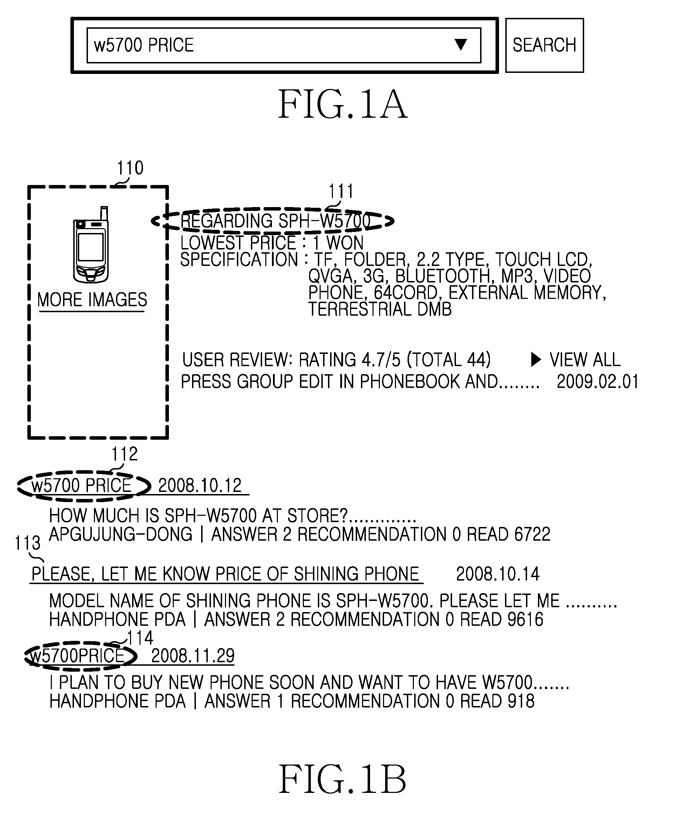

As would be recognized by those skilled in the art the portable terminal described herein may be a cellular telephone, or devices having wireless communication capability, such as a Personal Digital Assistant (PDA), a laptop computer, a netbook computer. For example, an IPhone, an IPad and similar wireless communication devices are contemplated as mobile terminals or portable devices within the context of the invention disclosed herein. IPhone and IPad are registered Trademarks of the Apple Co., Cupertino, CA. The wireless Internet service provides convenience in allowing a user who uses a mobile terminal to easily use the Internet in the case where the user is mobile and so cannot use a desktop Personal Computer (PC) to access the internet.. To use the wireless Internet service, a user may obtain desired information regardless of time and place by paying a data charge of the wireless Internet. When a user who uses the above-described wireless Internet function accesses a specific site and searches for desired information while being mobile, the user lists links related to a keyword, and a preview is provided together with the links. At this point, the user who uses the mobile terminal determines a site where desired information may exist through the preview of the link(s), selects one or more of the link(s), and views information provided by the selected link(s). FIGs. 1A - 1C are views illustrating a web search process in the conventional mobile terminal.

FIG. 1A is a screen illustrating a process for inputting a specific keyword in the conventional mobile terminal.

Referring to FIG. 1A, a user of the mobile terminal performs a search process by inputting a keyword ' w5700 price' on a search screen output in advance and pressing a search button in order to perform a search process regarding the keyword (or search term) 'w5700 price'.

FIG. 1B is a screen illustrating a screen outputting search results in a conventional mobile terminal.

Referring to FIG. 1B, the mobile terminal outputs search results obtained using the search term illustrated in FIG. 1A. Thus, the screen display may include results 111, 112, 113, and 114 which each include a combination of the search term " w5700 price."

As the search results are limited by the size of output screen of the mobile terminal, a user of the conventional mobile terminal needs to find out search results corresponding to a keyword by moving through or scanning an initial output screen.
That is, in the case where the user of the mobile terminal performs a search process using the keyword "w5700 price ", the mobile terminal outputs (110) search results from a predetermined output point, such as the left upper end of the display screen. However, because of the large number of search results that may be found, there is high probability that a large majority of the search results corresponding to the keyword input by the user are not output within a screen display region of the mobile terminal.

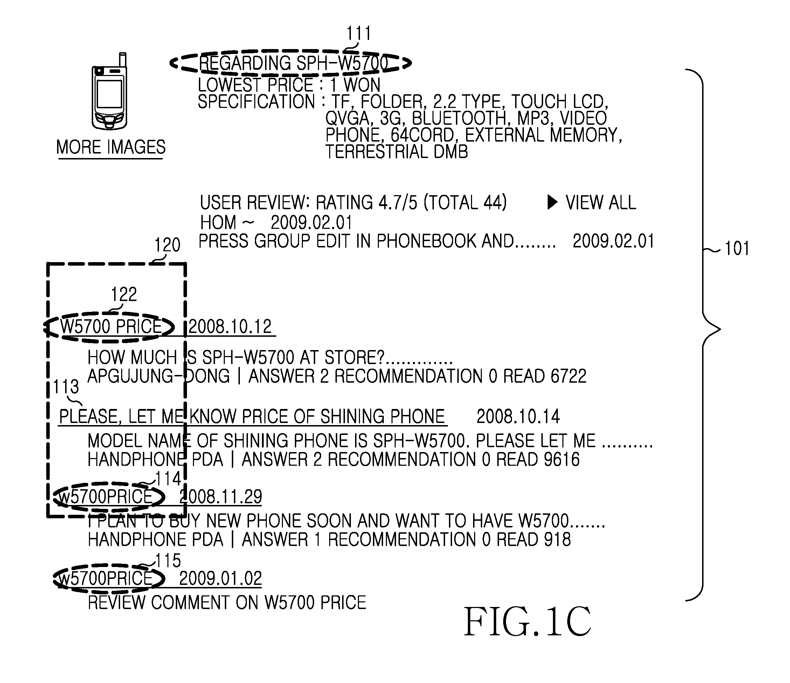

FIG. 1C is a screen illustrating a process for viewing search results in the conventional mobile terminal.

Referring to FIG. 1C, while the mobile terminal outputs search results according to the search process illustrated in FIGS. 1A and 1B, the user of the mobile terminal needs to move the information shown on the output screen in order to view search results corresponding to the keyword.
That is, the user of the mobile terminal should view (122) information including the keyword 'w5700 price' desired by the user by moving (120) an output search result screen downward using a movement key. Thus, a previously unviewed search result (i.e., "W5700 Price 2009.01.02, Review comment on W5700 Price") (115) is then viewable to the user.

The above-described problem remains as a crucial disadvantage in a mobile terminal having a slow page loading speed and a small output screen. When an amount of search results corresponding to the keyword is large, the user is inconvenienced in having to move an output screen many times and may have to pay a additional web access charges in order to view further information obtained in the original search.

Therefore, an apparatus and a method for web searching in a mobile terminal that solves the above-described problem are required.

### Summary of the Invention

An exemplary aspect of the present invention is to provide an apparatus and a method for web searching, for improving a search speed in a mobile terminal.

Another exemplary aspect of the present invention is to provide an apparatus and a method for viewing and outputting search results corresponding to a keyword in order to improve a web search speed in a mobile terminal.

Still another exemplary aspect of the present invention is to provide an apparatus and a method for changing an output point of web search results according to a user's selection in order to improve a web search speed in a mobile terminal.

In accordance with an exemplary aspect of the present invention, an apparatus for improving a web search speed in a mobile terminal is provided. The apparatus includes an output point determination unit for changing an output point of search results before outputting the search results corresponding to a web search request, and outputting the search results to the changed output point.

In accordance with another exemplary aspect of the present invention, a method for improving a web search speed in a mobile terminal is provided. The method includes: changing an output point of search results before outputting the search results corresponding to a web search request and outputting the search results to the changed output point.

Other exemplary aspects, advantages and salient features of the invention will become apparent to those skilled in the art from the following detailed description, which, taken in conjunction with the annexed drawings, discloses exemplary embodiments of the invention.

### Brief Description of the Drawings

The above and other aspects, features and advantages of certain exemplary embodiments of the present invention will be more apparent from the following description taken in conjunction with the accompanying drawings in which:
FIG. 1A is a view illustrating a process for inputting a keyword in the conventional mobile terminal;
FIG. 1B is a screen illustrating a screen outputting search results in the conventional mobile terminal;
FIG. 1C is a screen illustrating a process for viewing search results in the conventional mobile terminal;
FIG. 2 is a block diagram illustrating a mobile terminal that provides a web search service according to an exemplary embodiment of the present invention;
FIG. 3 is a flowchart illustrating a process for performing a web search in a mobile terminal according to an exemplary embodiment of the present invention;
FIG. 4 is a flowchart illustrating a web search process of a mobile terminal according to an exemplary embodiment of the present invention;
FIG. 5A is a screen illustrating a process for inputting a keyword in a mobile terminal according to an exemplary embodiment of the present invention;
FIG. 5B is a view illustrating a screen that outputs search results in a mobile terminal according to an exemplary embodiment of the present invention;
FIG. 6A is a view illustrating a screen that outputs search results corresponding to an input keyword in a mobile terminal according to an exemplary embodiment of the present invention;
FIG. 6B is a view illustrating a screen that outputs search results in a mobile terminal according to an exemplary embodiment of the present invention.

Throughout the drawings, like reference numerals will be understood to refer to like parts, components and structures.

### Detailed Description of the Invention

The following description with reference to the accompanying drawings is provided to assist in a comprehensive understanding of exemplary embodiments of the invention as defined by the appended claims. The description includes various specific details to assist a person of ordinary skill the art in understanding the claimed invention, but these are to be regarded as merely exemplary. Accordingly, those of ordinary skill in the art will recognize that various changes and modifications of the illustrative examples described herein can be made without departing from the spirit of the invention and the scope of the appended claims. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural references unless the context clearly dictates otherwise. Thus, for example, a reference to "a component surface" includes reference to one or more of such surfaces.

By the term "substantially" it is typically meant that the recited characteristic, parameter, or value need not be achieved exactly, but that deviations or variations, including but in no way limited to, for example, tolerances, measurement error, measurement accuracy limitations and other factors known to persons of ordinary skill in the art, may occur in amounts that do not preclude the effect the characteristic was intended to provide.
Exemplary embodiments of the present invention provide an apparatus and a method for web searching, for improving a search speed by determining search results corresponding to a keyword and changing an output point of the search results in a mobile terminal that provides a web search service.

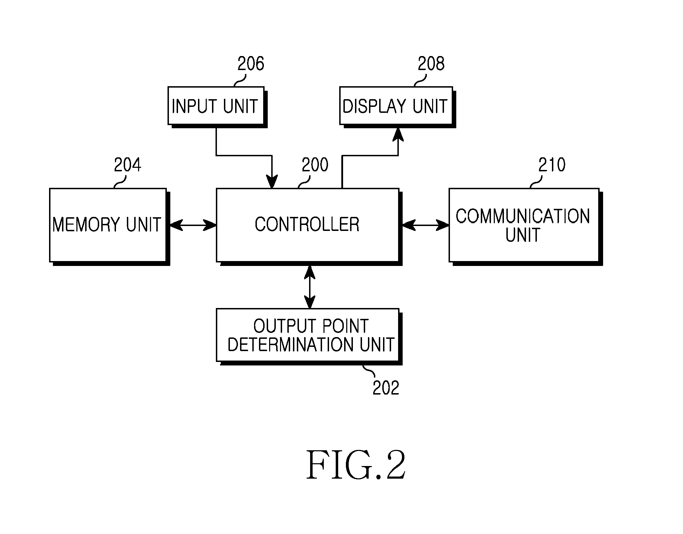

FIG. 2 is a block diagram illustrating a mobile terminal that provides a web search service according to an exemplary embodiment of the present invention.

Referring now to the example shown FIG. 2, an exemplary mobile terminal according to the present invention may include, for example, a controller 200, an output point determination unit 202, a memory unit 204, an input unit 206, a display unit 208, and a communication unit 210.

The controller 200 of the mobile terminal controls an overall operation of the mobile terminal. For example, the controller 200 performs processes and controls for voice communication and data communication, and in addition to the general functions, changes a search result output point before outputting web search results, and sets an output point of a relevant page according to an exemplary embodiment of the present invention.

In other words, the controller 200 changes an output point corresponding to a keyword input by a user of the mobile terminal when outputting search results, and allows the output point determination unit 202 to determine a location of the keyword input by the user of the mobile terminal from the search results.

After that, the controller 200 defines the location determined by the output point determination unit 202 as an output point of the search results corresponding to the keyword input by the user of the mobile terminal, and outputs the search results.

The output point determination unit 202 determines a search result output point for outputting the search results under control of the controller 200. For example, when outputting search results obtained through a search process of the user of the mobile terminal, the output point determination unit 202 determines a location of a keyword input by the user. For example, in the case where the user of the mobile terminal performs a search process using a keyword 'W5700 price', the output point determination unit 202 may determine a location including a sentence containing the search term 'W5700 price' from search results corresponding to the keyword, and define the location as an output point. Although the output point determination unit 202 is shown as being separate from the controller 200, it would be recognized that the processing performed by the output point determination unit 202 may be performed within the controller 200. Similarly, the output point determination unit may be a separate unit that is integrated within the controller 200 (i.e., system on a chip).

The memory unit 204 includes at least one of a Read Only Memory (ROM), a Random Access Memory (RAM), and a flash ROM. The ROM stores microcode of programs for processes and controls of the controller 200 and the output point determination unit 202, and various reference data.

The RAM is a working memory of the controller 200, and stores temporary data generated while various programs are executed. In addition, the flash ROM or ROM stores diverse types of updatable data for storage such as a phonebook, calling messages, and received messages.

The input unit 206 includes a plurality of function keys such as numerical key buttons of 0 to 9, a menu button, a cancel button, an OK button, a TALK button, an END button, an Internet access button, navigation key (or direction key) buttons, letter input keys, etc., and provides key input data (for example, a search request) corresponding to a key pressed by a user to the controller 200.

The display unit 208 displays status information generated during an operation of the mobile communication terminal. The display may include a limited number of letters, a large amount of moving images and still images, etc. The display unit 208 may be a Liquid Crystal Display (LCD), and displays search results from an output point such as a location including a keyword according to an exemplary embodiment of the present invention.

The communication unit 210 transmits/receives (transceiving unit) a radio signal of data input/output via an antenna (not shown). For example, during transmission, the communication unit 210 channel-codes and spreads data to be transmitted, and then performs a Radio Frequency (RF) process on the signal to transmit the signal. During reception, the communication unit 210 converts a received RF signal into a baseband signal, and despreads and channel-decodes the baseband signal to recover data.

A mobile terminal according to the above-described exemplary embodiment of the present invention outputs search results from a point at which a keyword is located in the search results. According to an exemplary embodiment of the present invention, a mobile terminal selects an output point (for example, a point including a title, a point including an image, etc.) selected by a user of the mobile terminal, and outputs search results from the selected point. That is, an apparatus and a method for changing an output point of the search results corresponding to a keyword are provided.

Additionally, one or more functions of the output point determination unit 202 may be performed by the controller 200 of the mobile terminal. The separate configuration and illustration of the output point determination unit 202 are an exemplary purpose only for convenience in describing the invention claimed and not for limiting the scope of the present invention. It would be obvious to those skilled in the art that various modifications may be made within the scope of the present invention. For example, all functions of the output point determination unit 202 may be processed by the controller 200.

A web searching apparatus for improving a search speed by determining search results corresponding to a keyword, and changing an output point of the search results has been described. Hereinafter, a web searching method for improving a search speed by changing an output point of the search results using the above-described apparatus according to an exemplary embodiment of the present invention will be described.

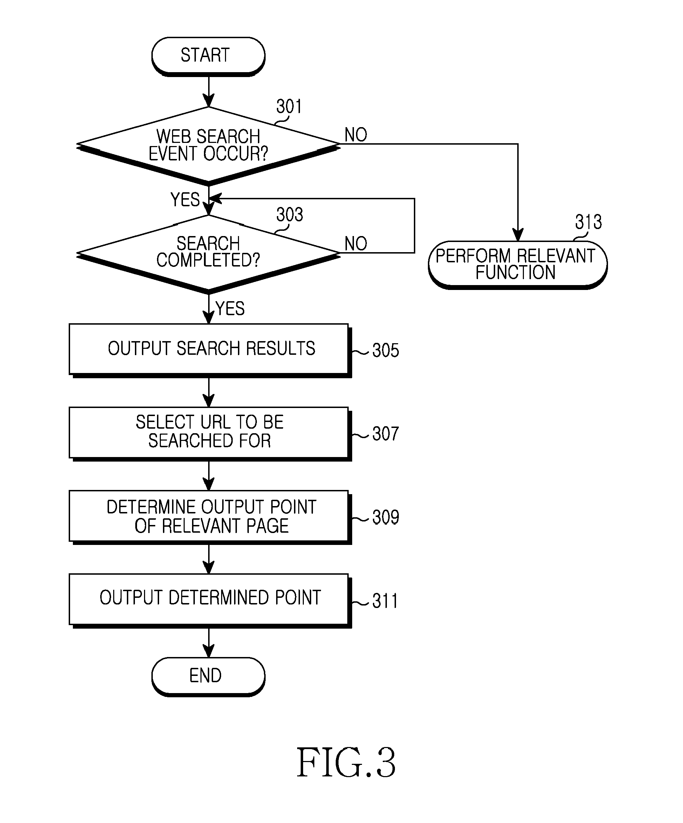

FIG. 3 is a flowchart illustrating a process for performing a web search in a mobile terminal according to an exemplary embodiment of the present invention.

Referring to FIG. 3, the mobile terminal determines whether a web search event occurs in step 301. The web search event denotes an operation for searching for a specific keyword using an Internet service function of the mobile terminal. Such initiation of a web search feature is well-known in the art and thus need not be described in detail herein.

When the web search event is determined not to have occurred in step 301, the mobile terminal proceeds to step 313 to perform a relevant function (for example, a standby mode).

However when the web search event occurs in step 301, the mobile terminal determines whether a process for searching a specific keyword is completed. That is, a determination is made whether a search complete status has been detected in step 303. Here, the search complete status denotes a status where a user of the mobile terminal inputs a specific keyword into a search window and presses a search button. For example, a complete status may be determined by the user depressing an "enter" key or by selecting the illustrated "search" button.

When determining that the search has not completed in step 303, the mobile terminal re-performs the process of waiting for the process to complete at step 303.

However, when the search complete has been completed in step 303, the mobile terminal outputs search results related to the relevant keyword on a display unit in step 305, and then allows the user to select a Uniform Resource Locator (URL) to be searched for in step 307.
The mobile terminal determines an output point of a relevant page in step 309. Here, the output point is a point for providing convenience in searching contents in order to solve a problem that the conventional mobile terminal moves to an URL and then outputs the upper part of a relevant page. When the output point is used, the user of the mobile terminal can select the intermediate portion of a relevant page or a location of a text corresponding to a relevant keyword as the output point.

For example, the mobile terminal, in accordance with the principles of the invention, may determines a top of the display screen and determines the number of lines down from the top line that the first search result containing the search term is to be displayed, then changes the output point to move the first search result to the top of the display.

In another aspect, the mobile terminal may determine the top line and the number of lines between the top and the first occurrence of the search term and then determine where the first occurrence of the search term occurred in the search result and adjust the output point so that the title of the search report is on the top line.

The mobile terminal outputs a relevant search page from the output point determined (in step 309) in step 311.

The mobile terminal exits the processing shown in FIG. 3.

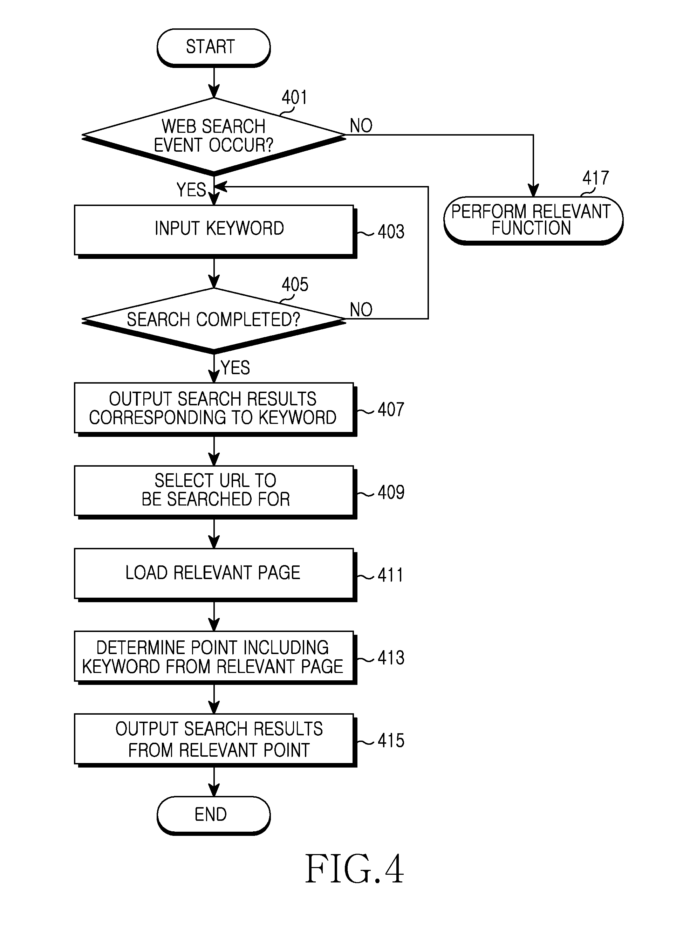

FIG. 4 is a flowchart illustrating a web search process of a mobile terminal according to an exemplary embodiment of the present invention.

Referring to FIG. 4, the mobile terminal determines whether a web search event occurs in step 401.

Here, the web search event denotes an operation for searching for a specific keyword using an Internet service function of the mobile terminal. When the web search event is not detected in step 401, the mobile terminal proceeds to step 417 to perform a relevant function (for example, a standby mode).

However, when the web search event is detected in step 401, the mobile terminal receives a keyword from a user in step 403, and determines whether a search complete status has occurred in step 405. Here, the search complete status denotes a condition where the user of the mobile terminal inputs a specific keyword into a search window and presses a search button.

When the search complete status is not detected in step 405, the mobile terminal continues to monitor the inputting of key word at step 403.

However, when the search complete status is detected in step 405, the mobile terminal outputs search results corresponding to the keyword input in step 407, and receives a URL to be searched for from the user in step 409.

The mobile terminal loads a relevant page corresponding to the URL in step 411. Steps 401 to 411 are the same as those of a web search process of the conventional mobile terminal.

The mobile terminal searches for the keyword input by the user of the mobile terminal in step 403 from the loaded page and determines a location within the loaded pages where the keyword exists in step 413.

In other words, the mobile terminal loads a web page corresponding to an URL selected by the user of the mobile terminal, and determines whether the keyword input by the user of the mobile terminal exists in the loaded web page.

The mobile terminal outputs search results from the point determined (in step 413) in step 415.

In one aspect of the invention, the mobile terminal according to the exemplary embodiment of the present invention may omit a scroll process for finding a relevant keyword in a web search process of the mobile terminal by finding a keyword to be searched for by a user, and outputting search results from the relevant portion.

The mobile terminal then exits the processing shown in FIG. 4.

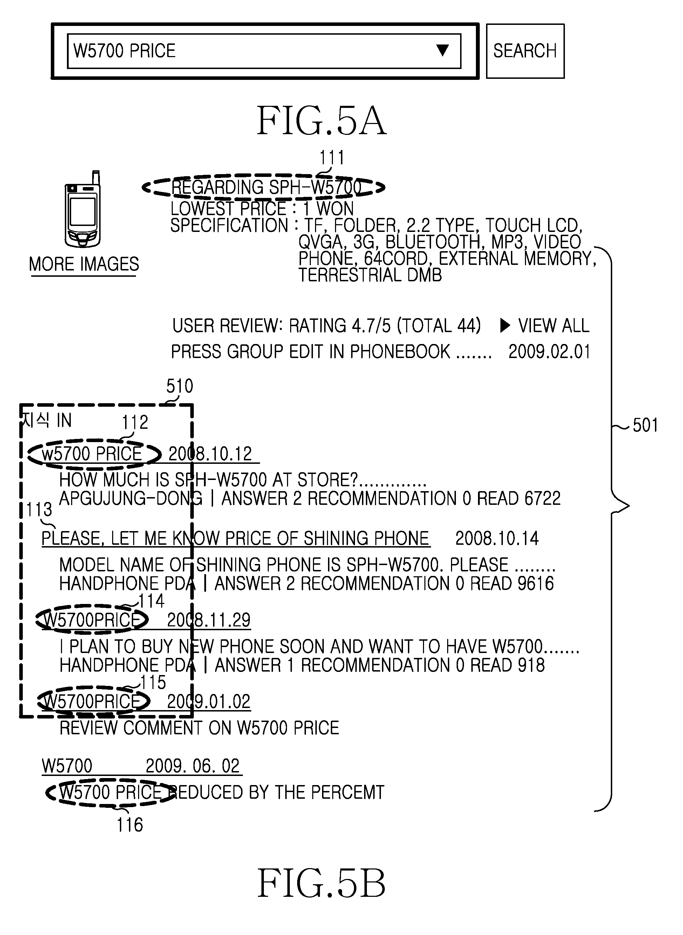

FIGs. 5A and 5B illustrate a web search screen according to an exemplary embodiment of the present invention.

FIG. 5A is a screen illustrating a process for inputting a specific keyword in a mobile terminal according to an exemplary embodiment of the present invention.

Referring to FIG. 5A, a user of the mobile terminal performs a search process by inputting a keyword (e.g., 'w5700 price') on a search screen and pressing a search button in order to perform a search process regarding the search term (keyword) 'w5700 price' in a manner similar to that described with regard to FIG. 1A.

FIG. 5B is a view illustrating a screen that outputs search results in a mobile terminal according to an exemplary embodiment of the present invention.

Referring to FIG. 5B, the mobile terminal outputs search results 501 of the search process of the keyword shown in FIG. 5A.

As the search results cannot be output entirely on a limited output screen 510 of the mobile terminal because of the large number of results containing combinations of the search terms. Hence, the mobile terminal, in accordance with the principles of the invention, searches for sentences or phrases that match the input keyword 'w5700 price' in the search results. When a sentence that matches the keyword in the search results is detected, the mobile terminal defines the sentence or phrase 112 as an output point of the search results corresponding to the input keyword 'w5700 price'.

Also, the mobile terminal, in accordance with the principles of the invention, filtered the search result based on the search term. So not only is the output point changed to see more results but the results are filtered to remove results that do not match the search terms exactly.

For example, sentence or phrase 111 includes the search term "W5700 Prince" and, hence, displayed on the limited display screen of the portable terminal. And sentence or phrase 113 does not include the search term "W5700 Prince" cannot be output screen of the mobile terminal. Similarly, the previously unviewed result in Figure 1A (W5700 Price 2009.11.29) (115) is now immediately shown on the limited screen of the portable terminal within search results 501. Also illustrated is a further previously unviewed search result "W5700 2009.06.02" (116) because this search result also includes the search term "W5700 Price."

Thus, only those entries that contain the search term "W5700 Price," in some form within the search results are shown as search results 501.

Therefore, the mobile terminal provides an advantage of allowing the user of the mobile terminal to easily determine search results corresponding to the input keyword desired without moving I screen of the search results 501 of the mobile terminal.

As would be appreciated and recognized, not all entries among the search results that contain the search term "W5700 Price" can be shown on the display screen because of the limited size of the display screen, however, the reduction of the number of search results provides significant convenience to the user.

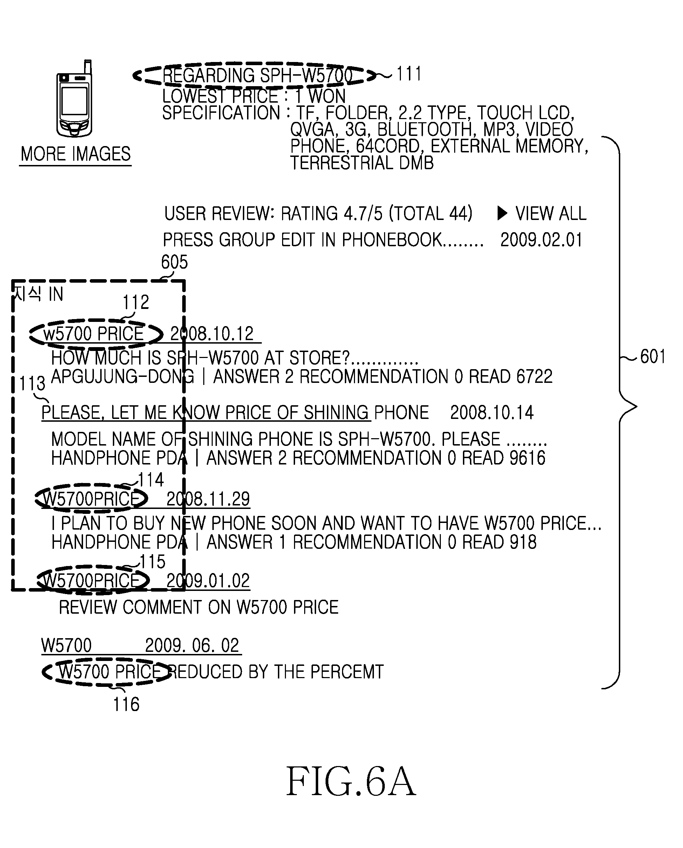

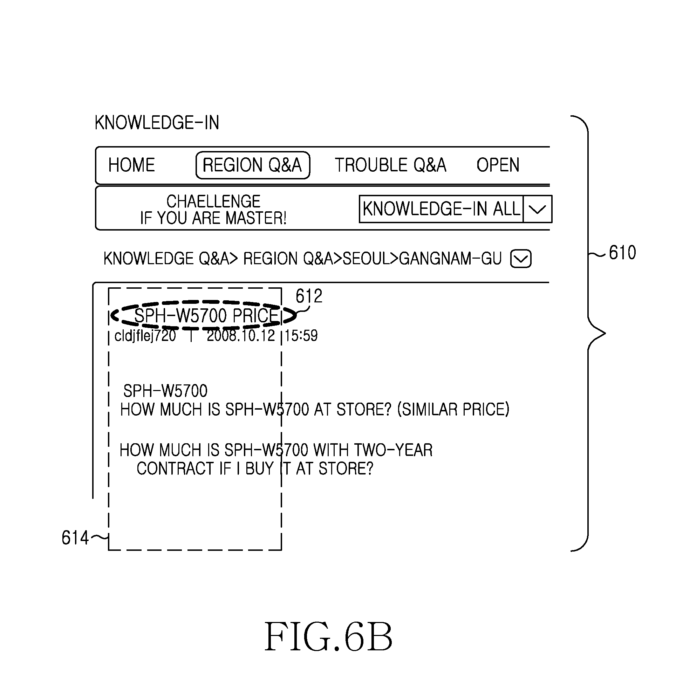

FIGs. 6A and 6B illustrate a web search screen according to an exemplary embodiment of the present invention.

FIG. 6A is a view illustrating a screen that outputs search results that match an input keyword in a mobile terminal according to an exemplary embodiment of the present invention.

Referring to FIG. 6A, a user of the mobile terminal performs a search process by inputting a keyword 'w5700 price' on a search screen and pressing a search button in order to perform a search process regarding "w5700 price," as previously described. The results of the search are output on the screen and shown as results 601.

As shown, the mobile terminal according to an exemplary embodiment of the present invention outputs (605) a predetermined range of search results using the keyword in the search results. This has been previously described with reference to FIG. 5B.

When the user clicks the relevant keyword in the displayed output, the mobile terminal switches an output screen to a page of the relevant keyword.

FIG. 6B is a view illustrating a screen that outputs search results in a mobile terminal according to an exemplary embodiment of the present invention.

Referring to FIG. 6B, in the case where a screen switches to a page associated with the relevant keyword illustrated in FIG. 6A, the mobile terminal may search for the keyword existing in the switched page and output a predetermined range of a screen about the keyword.

That is, when the mobile terminal outputs search results including the keyword from the search results illustrated in FIG. 6A and the search results includes a link or a Universal Resource Locator (URL) then a user selection of the URL causes the display to move to a relevant page corresponding to a user's selection. The mobile terminal may then output the web page associated with the selected keyword search result. In this illustrated example, a user selection of search result "regarding SPH-W5700 Price" (612) in FIG. 6A, causes the display of the corresponding web page (FIG. 6B).

As described above, the exemplary embodiments of the present invention provide an apparatus and a method for web searching, for improving a user's search speed in a mobile terminal that provides a web search service. The apparatus and the method may improve a search speed and thus reduce a wireless Internet charge by determining search results corresponding to a keyword and changing an output point of the search results during a web search process to solve a page movement problem that has to be performed by the conventional mobile terminal.

The above-described methods associated with the controller and/or output point determination unit according to the present invention can be realized in hardware or as software or computer code that can be stored in a recording medium such as a CD ROM, an RAM, a floppy disk, a hard disk, or a magneto-optical disk or downloaded over a network (i.e., The computer program can be provided from an external source which is electronically downloaded over a network, e.g., Internet, POTS, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. The code when loaded into a general purpose computer transformed the general purpose computer into a special purpose computer that may in part be dedicated to the processing shown herein. In addition, the computer, the processor or the dedicated hardware may be composed of at least one of a single processor, a multiprocessor, and a multi-core processor.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. An apparatus for improving a web search speed in a mobile terminal, the apparatus **characterized** as:
an output point determination unit (202) adapted to:
change an output point of search results before outputting the search results corresponding to a web search request, and
output the search results to the changed output point.

2. The apparatus of claim 1, wherein the output point determination unit (202) changes the output point of the search results using at least one factor selected from the group consisting of: a location of a keyword, a location of an image corresponding to the keyword, and a location of a title corresponding to the keyword.

3. The apparatus of claim 2, wherein the output point determination unit (202) changes a center of a screen comprising the search results to the output point of the search results.

4. The apparatus of claim 2, wherein the output point determination unit (202) determines a location of the factor to be changed as the output point of the search results, and changes the output point of the search results to the determined location of the factor.

5. The apparatus of claim 3, wherein the output point determination unit (202) outputs a predetermined range of the search results from the changed output point.

6. A method, operable in a mobile terminal output point determination unit (202), for improving a web search speed, the method **characterized** as:
changing an output point of search results before outputting the search results corresponding to a web search request; and
outputting, by the output point determination unit (202), the search results to the changed output point.

7. The method of claim 6, wherein the output point of the search results is changed using at least one factor selected from the group consisting of: a location of a keyword, a location of an image corresponding to the keyword, and a location of a title corresponding to the keyword.

8. The method of claim 7, wherein the output point of the search results comprises a center of a screen comprising the search results.

9. The method of claim 7, wherein the changing of the output point of the search results **characterized** as:
determining a location of the output point of the search results from the search results; and
changing the determined location to the output point of the search results.

10. The method of claim 9, wherein the outputting of the search results to the changed output point further **characterized** as: outputting a predetermined range of the search results from the changed output point.

11. An apparatus for determining a presentation of a web based search **characterized** as:
a processor (200) in communication with a memory (204), the memory including code which when accessed by the processor (200) causes the processor to:
receive a keyword from an input device (206);
provide the keyword to a web-based search engine through a transceiving device (210);
display search results associated with the keyword on a display unit (208), wherein a position of the search results on the display unit is associated with the received key word.
